# EUROPÄISCHE PATENTANMELDUNG

(11) **EP 3 578 940 A1**
(43) Veröffentlichungstag der Anmeldung: **11.12.2019**
(21) Anmeldenummer: 18176684.1
(22) Anmeldetag: 08.06.2018
(51) Int. Cl.: G01K 1/14, G01K 7/16, G01K 13/00

(54) **SENSOREINHEIT ZUR ERFASSUNG ZUMINDEST EINER TEMPERATUR AN ZUMINDEST EINER GALVANISCHEN ZELLE UND VERFAHREN ZUR HERSTELLUNG EINER SENSOREINHEIT**

(71) Anmelder: Heraeus Nexensos GmbH, 63450 Hanau (DE)
(72) Erfinder: MUZIOL, Matthias, 63450 Hanau (DE)
(74) Vertreter: Heraeus IP

(57) **Zusammenfassung**

Eine Sensoreinheit zur Erfassung zumindest einer Temperatur an zumindest einer Galvanischen Zelle, aufweisend:
zumindest ein Substrat mit einer ersten Oberfläche und einer der ersten Oberfläche zumindest bereichsweise gegenüberliegenden zweiten Oberfläche, wobei das Substrat zumindest bereichsweise flexibel ausgebildet ist; und
zumindest eine strukturierte Sensoranordnung zumindest bereichsweise angeordnet auf der zweiten Oberfläche des Substrats, wobei die strukturierte Sensoranordnung eine strukturierte Metallschicht umfasst und einteilig ausgebildet ist.

Auch betrifft die vorliegende Erfindung ein Verfahren zur Herstellung einer Sensoreinheit. Weiterhin betrifft die vorliegende Erfindung eine galvanische Zelle mit zumindest einer an der galvanischen Zelle angeordneten Sensoreinheit.

## Beschreibung

Die vorliegende Erfindung betrifft eine Sensoreinheit zur Erfassung zumindest einer Temperatur an zumindest einer galvanischen Zelle. Weiterhin betrifft die vorliegende Erfindung ein Verfahren zur Herstellung einer Sensoreinheit.

Im Stand der Technik werden gattungsgemäße Sensoreinheiten zur Temperaturmessung an einzelnen galvanischen Zellen, oder an galvanischen Zellen eines Zellenstapels, wie beispielsweise an Brennstoffzellen, oder an Zellen eines Energiespeichers, beispielsweise einer Batterie, zur Überwachung einer Zellentemperatur verwendet. Schnelle Temperatursteigungen können die chemischen Prozesse in einer Zelle dahingehend beeinflussen, dass zunächst der Wirkungsgrad der Zelle abnimmt. Bei einer länger andauernden Überhitzung der Zelle können Beschädigungen an der Zelle auftreten, die zu einer vollständigen Zerstörung der Zelle führen können. Abhängig von den jeweiligen Anwendungen der Zellen in einem Zellenstapel können mehrere Sensorelemente an einer Zelle und/oder an mehreren Zellen des Zellenstapels zur Temperaturüberwachung angeordnet werden.

Hierfür beschreibt beispielsweise die US 2013/0230755 A1 eine flexible Leitung, die zwischen den Zellen eines Zellenstapels angeordnet werden kann und an deren Ende ein Temperatursensor angeschlossen werden kann.

Eine weitere Temperatursensoreinheit zur Erfassung einer Zellentemperatur wird in der US 2013/0004811 A1 beschrieben. Die Temperatursensoreinheit umfasst ein flexibles Substrat mit einem darauf angeordneten Widerstandsthermometer mit Anschlüssen, die an dem Gehäuse einer Batteriezelle angeschlossen werden können.

Allerdings haben die aus dem Stand der Technik bekannten Temperatursensoreinheiten mit gedruckten Sensorelementen einen sehr komplexen und platzintensiven Aufbau, da mehrere Schichten nötig sind und hohe Fertigungstoleranzen berücksichtigt werden müssen. Auch ermöglichen die bekannten Temperatursensoreinheiten zumeist nur das Erfassen eines Temperaturwertes, nicht aber ein gleichzeitiges oder abwechselndes Temperaturerfassen und Heizen mit den Sensorelementen.

Aufgabe der vorliegenden Erfindung ist es daher, eine verbesserte Temperatursensoreinheit und ein Verfahren zur Herstellung einer verbesserten Temperatursensoreinheit bereitzustellen.

Diese Aufgabe wird erfindungsgemäß durch eine Temperatursensoreinheit gemäß des Gegenstands des Patentanspruchs 1 gelöst.

Die erfindungsgemäße Sensoreinheit zur Erfassung zumindest einer Temperatur an zumindest einer galvanischen Zelle weist hierfür auf:
zumindest ein Substrat mit einer ersten Oberfläche und einer der ersten Oberfläche zumindest bereichsweise gegenüberliegenden zweiten Oberfläche, wobei das Substrat zumindest bereichsweise flexibel ausgebildet ist; und
zumindest eine strukturierte Sensoranordnung zumindest bereichsweise angeordnet auf der zweiten Oberfläche des Substrats, wobei die strukturierte Sensoranordnung eine strukturierte Metallschicht umfasst und einteilig ausgebildet ist.

Als ein Substrat mit einer ersten Oberfläche und einer der ersten Oberfläche zumindest bereichsweise gegenüberliegenden zweiten Oberfläche, das zumindest bereichsweise flexibel ausgebildet ist kann ein Substrat verstanden werden, das unter Krafteinwirkung zumindest in bestimmten Bereichen im Wesentlichen zerstörungsfrei seine Form verändern kann. Je nach Ausführungsform kann bei Wegfall der einwirkenden Kraft das Substrat in die Ursprungsform zurückkehren, oder in der verbrachten Form bleiben. Auch können, je nach verwendeter Ausführungsform, alle Bereiche des Substrats flexibel ausgebildet sein, oder nur bestimmte Bereiche, um dadurch an die Geometrie des Messkörpers angepasst zu werden.

Erfindungsgemäß ist zumindest eine strukturierte Sensoranordnung zumindest bereichsweise auf der zweiten Oberfläche des Substrats angeordnet, wobei die strukturierte Sensoranordnung eine strukturierte Metallschicht umfasst und einteilig ausgebildet ist. Als Sensoranordnung kann eine Anordnung von mindestens zwei Sensorelementen in einer einteiligen Metallschicht, beispielsweise einer Folie, verstanden werden. In der einteiligen Metallschicht können die Leiterbahnen, wie auch die Sensorelemente, beispielsweise als mäanderförmige Leiterbahnen, angeordnet sein.

Im Allgemeinen kann die erfindungsgemäße Sensoreinheit zur Temperaturmessung an einer galvanischen Zelle oder an einer Vielzahl von galvanischen Zellen, beispielsweise an einem Zellenstapel angeordnet sein. Die galvanische Zelle kann, je nach Anwendung, eine Batteriezelle, oder eine Brennstoffzelle sein. Die Sensoreinheit kann aber auch an einem anderen sich erhitzenden Körper, wie beispielsweise an einem Motor, einem Heizelement in einem Sensor, oder einer Heizeinrichtung, wie beispielsweise einer Heizeinrichtung in einer Elektrischen Zigarette oder eines Aerosol-Verdampfers angeordnet sein.

Auch kann in Beispielen der Erfindung zumindest ein Schnitt, bevorzugt eine Vielzahl von Schnitten, in das Substrat eingebracht sein, so dass die einzelnen Sensoren aus der Ebene des Substrats herausgeschwenkt und gegebenenfalls auch noch um die dadurch entstehende neue Längsachse verdreht werden können. Damit liegen die Leiterbahnen in einer Ebene über den Batteriezellen und die Sensoren hintereinander zwischen den Batteriezellen.

Mit der Erfindung ist es erstmalig gelungen eine kostengünstig herstellbare und platzsparend zu integrierende Sensoreinheit bereitzustellen, die es ermöglicht Temperaturwerte an verschiedenen Positionen an einem komplex aufgebauten und großflächigen Messkörper parallel zu erfassen. Durch den Einsatz der strukturierten Metallschicht entfällt das Aufbringen einer weiteren Funktionsschicht. Weiterhin hat die Sensoreinheit, die aus der strukturierten Metallschicht ausgeformt ist, eine geringere Toleranz in ihrem Temperaturgang im Vergleich zu einer gedruckten Sensoreinheit.

In einem Beispiel umfasst die strukturierte Metallschicht eine Metallfolie, aufweisend ein Kupfermaterial, oder ein Nickelmaterial.

Vorteilhaft sind diese Materialien gut zu kontaktieren, da bei diesen Materialien sich selbständig bildende elektrisch isolierende Oxidschichten, wie beispielsweise bei Aluminium, kein größeres Problem darstellen.

In einem weiteren Beispiel ist die strukturierte Sensoranordnung auf der zweiten Oberfläche des Substrats angeordnet durch Laminieren und/oder Kleben der strukturierten Sensoranordnung auf die zweite Oberfläche des Substrats.

Durch das Laminieren oder Verkleben kann die strukturierte Sensoranordnung fest mit dem Substrat verbunden werden. So kann auf sehr einfache Weise die strukturierte Sensoranordnung auf dem Substrat angeordnet werden.

In noch einem weiteren Beispiel weist die Sensoreinheit zumindest ein Adhäsionsmittel, bevorzug ein Klebefilm auf, das zumindest bereichsweise auf der ersten und/oder auf der zweiten Oberfläche des Substrats angeordnet ist, zum Anbringen der Sensoreinheit an der galvanischen Zelle.
Vorteilhaft kann mittels des Adhäsionsmittels die Sensoreinheit einfach und kostengünstig an einer Oberfläche der galvanischen Zelle befestigt werden. Das Adhäsionsmittel kann sich entweder über die gesamte erste und/oder zweite Oberfläche erstrecken, oder sich nur über einen Teilbereich der ersten und/oder zweiten Oberfläche erstrecken.

Das Adhäsionsmittel kann ein selbstklebendes Material aufweisen, beispielweise Polymere aufweisen, wie Polyacrylaten, Polyamiden, Polyurethanen, Siliconen oder Epoxiden. Es können auch beidseitig klebende Klebefilme, insbesondere hochtemperaturbeständige Klebefilme auf Basis von Polyimidbändern zur Fixierung der Sensoreinheit verwendet werden.

In einem weiteren Beispiel umfasst das Substrat eine flexible Folie, insbesondere eine Polyimidfolie.

Vorteilhaft ermöglicht dieses preisgünstige Ausgangsmaterial eine vollflächige Erfassung an relevanten Oberflächen.

In noch einem Beispiel umfasst die strukturierte Sensoranordnung zumindest zwei Sensorelemente, bevorzugt Messwiderstände mit mäanderförmiger Struktur, jeweils angepasst zum Erfassen einer Temperatur, wobei die Sensorelemente an unterschiedlichen Positionen auf der zweiten Oberfläche des Substrats angeordnet sind.

Vorteilhaft können durch die Verwendung von mehreren Sensorelementen in der strukturierten Sensoranordnung, Temperaturwerte an unterschiedlichen Positionen einer galvanischen Zellen oder Temperaturwerte an Unterschiedlichen einer Vielzahl von galvanischen Zellen in einem Zellstapel erfasst werden. Die beiden Sensorelemente können zumindest teilweise miteinander verbunden sein, beispielsweise können die Sensorelemente eine gemeinsame Masse aufweisen. Alternativ können die Sensorelemente auch voneinander unabhängig kontaktiert werden. Auch kann die Sensoranordnung abhängig von dem geplanten Einsatzgebiet, mehr als nur zwei Sensorelemente aufweisen. Vorteilhaft ermöglichen Messwiderstände mit mäanderförmiger Struktur auf dem Substrat das Bilden sehr dünner Sensorelemente, die zu einem kompakten und materialsparenden Aufbau beitragen.

In einem Beispiel ist zumindest eines der Sensorelemente angepasst als Heizer betrieben zu werden, und angepasst ein elektrisches Signal in Wärme umzusetzen.

Der Betrieb als Heizer ermöglicht eine direkte Beheizung der galvanischen Zellen, um eine erforderliche Betriebstemperatur zu erreichen. So wird beispielsweise verhindert, dass Li-Ionenbatterien bei zu tiefen Temperaturen mit zu hohen Stromdichten geladen und beschädigt werden. Vorteile bietet die parallele Verwendung der Sensorelemente als Temperatursensor und als Heizer. Dabei kann die Beaufschlagung des Heizers mit elektrischer Energie und die Temperaturerfassung über den elektrischen Widerstand des Sensorelements gleichzeitig erfolgen oder nachgeschaltet sein. Die strukturierte Metallschicht des Sensorelements ist vorteilhaft als flächig ausgebildete Leiterbahn mit annähernd konstantem Querschnitt ausgestaltet, um eine flächenhomogene Erwärmung des Substrats ohne "Hot Spots" zu gewährleisten. Dieses Beispiel stellt eine preiswerte und kompakte Alternative zu den aus dem Stand der Technik bekannten Anordnungen dar, bei denen ein Temperatursensorchip auf einer Heizstruktur angeordnet ist.

In einem weiteren Beispiel weist die Sensoreinheit Leiterbahnen auf und die Sensorelemente sind miteinander über die Leiterbahnen verbunden und wobei die Leiterbahnen jeweils zumindest ein Anschlussmittel, insbesondere zumindest ein Anschlusspad, umfassend ein Silber- Kupfer-, Gold-, und/oder Zinnmaterial zur Kontaktierung der Sensorelemente aufweisen.

Vorteilhaft kann auf die Anschlusspads ein Verbindungsmittel, beispielsweise eine Kupferader, aufgelötet werden, um die Sensoreinheit mit einem Auswerte- und/oder Steuermittel, beispielsweise mit einem Controller, zu verbinden.

In einem Beispiel sind die Leiterbahnen mit der zweiten Oberfläche des Substrats verbunden durch:
a) Aufdrucken einer Silber- und/oder Kupfermaterial enthaltenden Paste, und/oder
b) Laminieren und/oder Kleben von Strukturen, aufweisend ein Kupfermaterial oder ein Nickelmaterial.

Die Leiterbahnen können separat von der strukturierten Sensoranordnung auf dem Substrat angeordnet werden, beispielsweise auf das Substrat als Paste gedruckt werden oder in der strukturierten Metallschicht umfasst sein.

In noch einem Beispiel weist die Sensoreinheit auf:
zumindest eine Abdeckfolie angeordnet auf der zweiten Oberfläche der Substrats zumindest abschnittsweise angeordnet auf der strukturierten Sensoranordnung, und/oder
zumindest ein Vergussmaterial, insbesondere ein Siliconcompound, angeordnet auf der zweiten Oberfläche des Substrats zumindest abschnittsweise angeordnet auf der strukturierten Sensoranordnung.

Auch die Abdeckfolie kann einteilig oder mehrteilig ausgestaltet sein und kann zumindest bereichsweise die Sensorelemente abdecken. Dadurch kann vorteilhaft das Eindringen von Feuchtigkeit in den Kontaktbereich verhindert werden. Die Abdeckfolie kann auch als Adhäsionsfolie ausgestaltet sein. Alternativ oder zusätzlich kann zumindest ein Sensorelement mit einem Vergussmaterial abgedeckt sein, insbesondere mit einem Siliconcompound, um das Eindringen von Feuchtigkeit zu verhindern. Hierbei ist es besonders vorteilhaft, wenn der Siliconcompound eine gute Wärmeleitfähigkeit hat.

Die Erfindung schlägt auch ein Verfahren zur Herstellung einer Sensoreinheit zur Erfassung zumindest einer Temperatur an zumindest einer galvanischen Zelle vor, aufweisend die Schritte:
Bereitstellen zumindest eines Substrats mit einer ersten Oberfläche und einer der ersten Oberfläche zumindest bereichsweise gegenüberliegenden zweiten Oberfläche, wobei das Substrat zumindest bereichsweise flexibel ausgebildet ist; und
Anordnen einer strukturierten Sensoranordnung zumindest bereichsweise auf der zweiten Oberfläche des Substrats, wobei die strukturierte Sensoranordnung eine strukturierte Metallschicht umfasst und einteilig ausgebildet ist.

In einem Beispiel weist das Verfahren auf:
Strukturieren einer Metallschicht, bevorzugt einer Metallfolie, mittels Fräsen, Ätzen, Stanzen und/oder Laserschneiden, um die strukturierte Sensoranordnung, bevorzugt einteilig, zu erhalten.

Durch das Strukturieren kann die gesamte strukturierte Sensoranordnung einteilig aus einer Metallschicht erhalten werden, so dass beispielsweise mehrere Sensorelemente verbunden über Leiterbahnen verbunden in der einen Metallschicht abgebildet sind. Vorteilhaft entfallen hiermit elektrische Verbindungsstellen zwischen den Sensorelementen. Weiter vorteilhaft kann durch die einteilig aus der Metallschicht erhaltene strukturierte Sensoranordnung der Widerstand durch die Leiterbahnen selbst erzeugt werden, so dass keine zusätzlich aufgebrachte Schicht notwendig ist. In weiteren Beispielen kann auch die Metallschicht zunächst auf der zweiten Oberfläche des Substrats angeordnet werden und danach strukturiert werden.

In einem weiteren Beispiel weist das Anordnen auf:
Laminieren und/oder Kleben der strukturierten Sensoranordnung auf die zweite Oberfläche des Substrats.

Einerseits ist hiermit das Verbinden der dünnen, folienartigen strukturierten Sensoranordnung mit dem Substrat mittels eines Klebers gemeint, als auch das Verbinden der strukturierten Sensoranordnung mit dem Substrat durch Erreichen der Glasübergangstemperatur und entsprechenden Drucks.

In noch einem Beispiel weist das Verfahren auf:
Anordnen zumindest eines Adhäsionsmittels, zumindest bereichsweise, auf der ersten und/oder auf der zweiten Oberfläche des Substrats, zum Anbringen der Sensoreinheit an der galvanischen Zelle.

Vorteilhaft kann mittels des Adhäsionsmittels die Sensoreinheit einfach und kostengünstig an einer Oberfläche der galvanischen Zelle befestigt werden. Das Adhäsionsmittel kann sich entweder über die gesamte erste und/oder zweite Oberfläche erstrecken, oder sich nur über einen Teilbereich der ersten und/oder zweiten Oberfläche erstrecken.

Die Erfindung schlägt auch eine galvanische Zelle, insbesondere eine Batteriezelle oder eine Brennstoffzelle vor, mit zumindest einer an der galvanischen Zelle angeordneten erfindungsgemäßen Sensoreinheit und/oder hergestellt mit dem erfindungsgemäßen Verfahren.

Weitere Merkmale und Vorteile der Erfindung ergeben sich aus der nachfolgenden Beschreibung, in der bevorzugte Ausführungsformen der Erfindung anhand von schematischen Zeichnungen erläutert sind.

Dabei zeigt:
- Figur 1: eine schematische Ansicht einer Sensoreinheit gemäß einer ersten Ausführungsform der Erfindung;
- Figur 2: eine schematische Ansicht einer Sensoreinheit gemäß der ersten Ausführungsform der Erfindung mit freiliegenden Sensorelementen;
- Figur 3: eine schematische Ansicht einer Sensoreinheit gemäß weiteren Ausführungsformen der Erfindung mit freiliegenden Sensorelementen; und
- Figur 4: ein Verfahren zum Herstellen einer Sensoreinheit gemäß einer Ausführungsform der Erfindung.

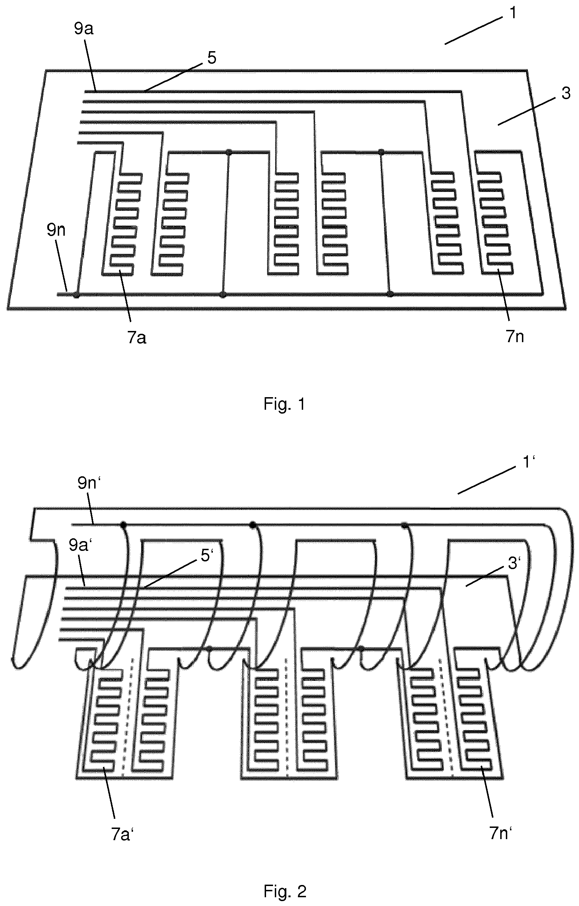

Figur 1 zeigt eine schematische Ansicht einer Sensoreinheit 1 gemäß einer ersten Ausführungsform der Erfindung.

In der gezeigten Ausführungsform sind auf der gezeigten zweiten Oberfläche des Substrats 3 Sensorelemente 7a - 7n angeordnet, um Temperaturwerte an unterschiedlichen Positionen an einer galvanischen Zelle (nicht gezeigt) zu ermitteln. In weiteren Ausführungsformen können auf dem Substrat 3, abhängig von der geplanten Verwendung, auch mehr oder weniger Sensorelemente angeordnet werden. Auch kann, abhängig von dem vorgesehenen Einsatzgebiet, die Geometrie des Substrats und die Anordnung der Sensorelemente auf dem Substrat anders als es in Figur 1 gezeigt wird gewählt werden. Beispielsweise kann das Substrat in weiteren Ausführungsformen auch rund oder oval ausgestaltet sein.

In der gezeigten Ausführungsform umfasst das Substrat eine flexible Folie, insbesondere eine Polyimidfolie oder eine Polyesterfolie. In weiteren, nicht hierin gezeigten Ausführungsformen, kann das Substrat auch bereichsweise unterschiedlich flexibel, bzw. zumindest bereichsweise starr, ausgebildet sein.

Weiterhin ist in der gezeigten Ausführungsform die strukturierte Sensoranordnung 5 als eine einteilige Metallschicht dargestellt. In der gezeigten Ausführungsform kann die einteilige Metallschicht eine Kupfer- oder Nickelfolie sein. In der einteiligen Metallschicht sind die Leiterbahnen 9a - 9n, wie auch die Sensorelemente 7a - 7n, die als mäanderförmige Leiterbahnen gezeigt werden, angeordnet. In weiteren, nicht hierin gezeigten Ausführungsformen, können die Sensorelemente auch aus mindestens einer spiralförmig, oval oder rechteckig geführten Widerstandsleiterbahn gebildet werden.

Die strukturierte Sensoranordnung 5 ist auf der zweiten Oberfläche des Substrats 3 angeordnet, beispielsweise durch Laminieren und/oder Kleben der strukturierten Sensoranordnung 5 auf die zweite Oberfläche des Substrats 3.

Figur 2 zeigt eine schematische Ansicht einer Sensoreinheit 1' gemäß der ersten Ausführungsform der Erfindung mit freiliegenden Sensorelementen 7a' - 7n'. Der Aufbau der gezeigten Sensoreinheit 1' entspricht dem Aufbau der bereits in Figur 1 gezeigten Sensoreinheit. In der Figur 2 sind die Sensorelementen 7a' - 7n' freigelegt beispielsweise mittels Ausschneidens der gewünschten Fläche. In der gezeigten Ausführungsform sind Bereiche des flexibel ausgestalteten Substrats 3' mit den darauf angeordneten Leiterbahnen 9n', die dem Masseanschluss der Sensorelemente 7a' - 7n' dienen weggeklappt, um die Sensorelemente 7a' - 7n' freizulegen. Benachbarte Sensorelemente 7a' - 7n' können weiterhin voneinander getrennt werden, um diese flexibel an einer oder an einer Vielzahl von galvanischen Zellen anzuordnen.

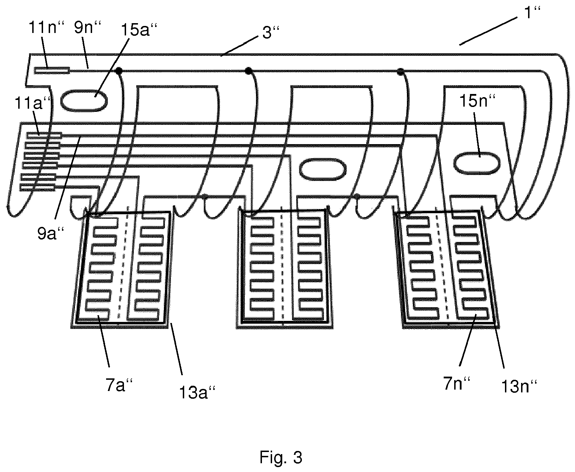

Figur 3 zeigt eine schematische Ansicht einer Sensoreinheit 1" gemäß weiteren Ausführungsformen der Erfindung mit freiliegenden Sensorelementen 7a" - 7n". Der Aufbau der gezeigten Sensoreinheit 1" entspricht dem Aufbau der bereits in Figur 2 gezeigten Sensoreinheit. Außerdem wurde der in Figur 3 gezeigten Sensoreinheit 1" weitere Merkmale hinzugefügt.

Die Leiterbahnen 9a" - 9n" weisen jeweils ein Anschlussmittel 11a" - 11n" zur Kontaktierung der Sensorelemente 7a" - 7n" auf. Die Anschlussmittel 11a" - 11n" können in einer Ausführungsform ein Silber- und/oder Kupfermaterial aufweisen. Auf diese Anschlussmittel 11a" - 11n" kann dann jeweils ein Verbindungsmittel, beispielsweise eine Kupferader, aufgelötet werden, um die Sensoreinheit 1" mit einem Auswerte- und/oder Steuermittel, beispielsweise mit einem Controller, zu verbinden.

Weiterhin werden in Figur 3 Adhäsionsmittel 15a" - 15n" gezeigt, die in einer Ausführungsform als Klebefilm an unterschiedlichen Stellen des Substrats befestigt werden können, um die Sensoreinheit 1" an der galvanischen Zelle anzubringen.

Auch werden in Figur 3 Abdeckfolien 13a" - 13n" gezeigt, die auf den Sensorelementen 7a" - 7n" angeordnet sind. In nicht gezeigten Ausführungsformen kann die Abdeckfolie auch einteilig ausgestaltet sein und kann zumindest bereichsweise die Sensorelemente abdecken. Alternativ oder zusätzlich zu den Abdeckfolien 13a" - 13n" kann zumindest ein Sensorelement mit einem Vergussmaterial abgedeckt sein, insbesondere mit einem Siliconcompound, um das Eindringen von Feuchtigkeit zu verhindern.

Die Erfindung schlägt auch ein Verfahren 1000 zur Herstellung einer Sensoreinheit zur Erfassung zumindest einer Temperatur an zumindest einer galvanischen Zelle vor, aufweisend die Schritte:
Bereitstellen 1010 zumindest eines Substrats mit einer ersten Oberfläche und einer der ersten Oberfläche zumindest bereichsweise gegenüberliegenden zweiten Oberfläche, wobei das Substrat zumindest bereichsweise flexibel ausgebildet ist; und
Anordnen 1020 einer strukturierten Sensoranordnung zumindest bereichsweise auf der zweiten Oberfläche des Substrats, wobei die strukturierte Sensoranordnung eine strukturierte Metallschicht umfasst und einteilig ausgebildet ist.

Optional kann das Anordnen 1020 aufweisen:
Strukturieren 1021 einer Metallschicht, bevorzugt einer Metallfolie, mittels Fräsen, Ätzen, Stanzen und/oder Laserschneiden, um die strukturierte Sensoranordnung, bevorzugt einteilig, zu erhalten, und/oder
Laminieren 1022 und/oder Kleben der strukturierten Sensoranordnung auf die zweite Oberfläche des Substrats.

Weiter optional kann das Verfahren 1000 den Schritt aufweisen:
Anordnen 1030 zumindest eines Adhäsionsmittels, zumindest bereichsweise, auf der ersten und/oder auf der zweiten Oberfläche des Substrats, zum Anbringen der Sensoreinheit an der galvanischen Zelle

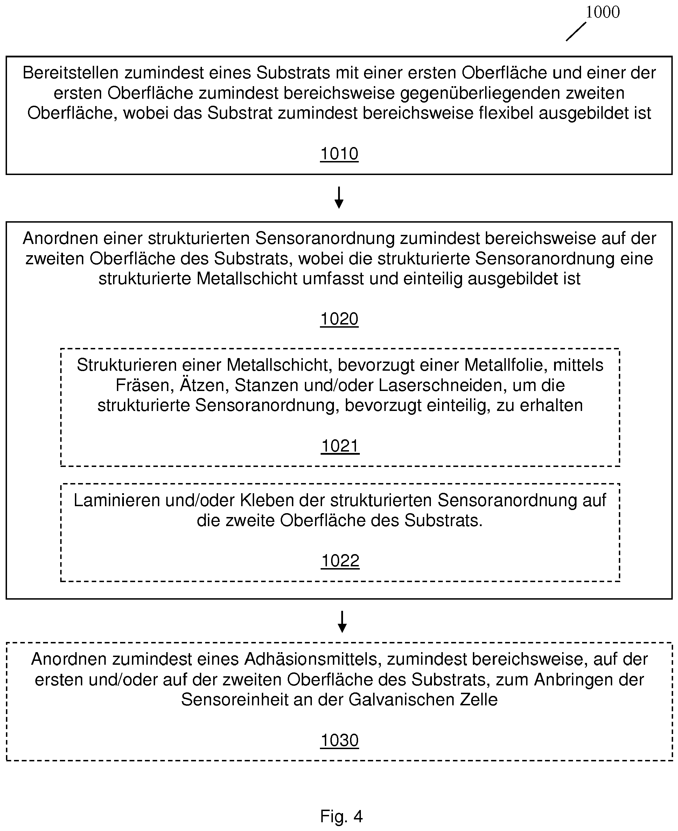

Die optionalen Schritte sind in der Figur 4 mit einer gestrichelten Umrandung dargestellt.

Weitere Merkmale und Vorteile der Erfindung ergeben sich aus der nachfolgenden Beschreibung, in der bevorzugte Ausführungsformen der Erfindung anhand von schematischen Zeichnungen erläutert sind.

### Bezugszeichenliste

- 1, 1', 1": Sensoreinheit
- 3, 3' 3": Substrat
- 5, 5': strukturierte Sensoranordnung
- 7a, 7a', 7a", 7n, 7n', 7n": Sensorelement
- 9a, 9a', 9a", 9n, 9n', 9n": Leiterbahn
- 11a" - 11n": Anschlussmittel
- 13a" - 13n": Abdeckfolie
- 15a" - 15n": Adhäsionsmittel

- 1000: Verfahren zur Herstellung einer Sensoreinheit
- 1010: Bereitstellen zumindest eines Substrats
- 1020: Anordnen einer strukturierten Sensoranordnung
- 1021: Strukturieren
- 1022: Laminieren und/oder Kleben
- 1030: Anordnen zumindest eines Adhäsionsmittels

## Patentansprüche

1. Sensoreinheit zur Erfassung zumindest einer Temperatur an zumindest einer galvanischen Zelle, aufweisend:
zumindest ein Substrat (3, 3' 3") mit einer ersten Oberfläche und einer der ersten Oberfläche zumindest bereichsweise gegenüberliegenden zweiten Oberfläche, wobei das Substrat (3, 3' 3") zumindest bereichsweise flexibel ausgebildet ist; und
zumindest eine strukturierte Sensoranordnung (5, 5') zumindest bereichsweise angeordnet auf der zweiten Oberfläche des Substrats (3, 3' 3"), wobei die strukturierte Sensoranordnung (5, 5') eine strukturierte Metallschicht umfasst und einteilig ausgebildet ist.

2. Sensoreinheit nach Anspruch 1, wobei die strukturierte Metallschicht eine Metallfolie aufweisend ein Kupfermaterial oder ein Nickelmaterial umfasst.

3. Sensoreinheit nach Anspruch 1 oder 2, wobei die strukturierte Sensoranordnung (5, 5') auf der zweiten Oberfläche des Substrats (3, 3' 3") angeordnet ist durch Laminieren und/oder Kleben der strukturierten Sensoranordnung (5, 5') auf die zweite Oberfläche des Substrats (3, 3' 3").

4. Sensoreinheit nach einem der vorangehenden Ansprüchen, aufweisend:
zumindest ein Adhäsionsmittel (15a" - 15n"), bevorzug ein Klebefilm, zumindest bereichsweise angeordnet auf der ersten und/oder auf der zweiten Oberfläche des Substrats (3, 3' 3"), zum Anbringen der Sensoreinheit an der galvanischen Zelle.

5. Sensoreinheit nach einem der vorangehenden Ansprüche, wobei das Substrat (3, 3' 3") eine flexible Folie, insbesondere eine Polyimidfolie, umfasst.

6. Sensoreinheit nach einem der vorangehenden Ansprüchen, wobei die strukturierte Sensoranordnung (5, 5') zumindest zwei Sensorelemente (7a, 7a', 7a", 7n, 7n', 7n"), bevorzugt Messwiderstände mit mäanderförmiger Struktur, jeweils angepasst zum Erfassen einer Temperatur umfasst, wobei die Sensorelemente (7a, 7a', 7a", 7n, 7n', 7n") an unterschiedlichen Positionen auf der zweiten Oberfläche des Substrats (3, 3' 3") angeordnet sind.

7. Sensoreinheit nach Anspruch 6, wobei zumindest eines der Sensorelemente (7a, 7a', 7a", 7n, 7n', 7n") angepasst ist als Heizer betrieben zu werden, und angepasst ist ein elektrisches Signal in Wärme umzusetzen.

8. Sensoreinheit nach einem der Ansprüche 6 oder 7, wobei die Sensoreinheit Leiterbahnen (9a, 9a', 9a", 9n, 9n', 9n") aufweist und die Sensorelemente (7a, 7a', 7a", 7n, 7n', 7n") miteinander über die Leiterbahnen (9a, 9a', 9a", 9n, 9n', 9n") verbunden sind und wobei die Leiterbahnen (9a, 9a', 9a", 9n, 9n', 9n") jeweils zumindest ein Anschlussmittel (11a" - 11n"), insbesondere zumindest ein Anschlusspad, umfassend ein Silber- Kupfer-, Gold-, und/oder Zinnmaterial zur Kontaktierung der Sensorelemente (7a, 7a', 7a", 7n, 7n', 7n") aufweisen.

9. Sensoreinheit nach Anspruch 8, wobei die Leiterbahnen (9a, 9a', 9a", 9n, 9n', 9n") mit der zweiten Oberfläche des Substrats (3, 3' 3") verbunden ist durch:
a) Aufdrucken einer Silber- und/oder Kupfermaterial enthaltenden Paste, und/oder
b) Laminieren und/oder Kleben von Strukturen, aufweisend ein Kupfermaterial oder ein Nickelmaterial.

10. Sensoreinheit nach einem der vorangehenden Ansprüche, aufweisend:
zumindest eine Abdeckfolie (13a" - 13n") angeordnet auf der zweiten Oberfläche der Substrats (3, 3' 3") zumindest abschnittsweise angeordnet auf der strukturierten Sensoranordnung (5, 5'), und/oder
zumindest ein Vergussmaterial, insbesondere ein Siliconcompound, angeordnet auf der zweiten Oberfläche des Substrats (3, 3' 3") zumindest abschnittsweise angeordnet auf der strukturierten Sensoranordnung v.

11. Verfahren zur Herstellung einer Sensoreinheit zur Erfassung zumindest einer Temperatur an zumindest einer galvanischen Zelle, aufweisend die Schritte:
Bereitstellen (1010) zumindest eines Substrats (3, 3' 3") mit einer ersten Oberfläche und einer der ersten Oberfläche zumindest bereichsweise gegenüberliegenden zweiten Oberfläche, wobei das Substrat (3, 3' 3") zumindest bereichsweise flexibel ausgebildet ist; und
Anordnen (1020) einer strukturierten Sensoranordnung (5, 5') zumindest bereichsweise auf der zweiten Oberfläche des Substrats (3, 3' 3"), wobei die strukturierte Sensoranordnung (5, 5') eine strukturierte Metallschicht umfasst und einteilig ausgebildet ist.

12. Verfahren nach Anspruch 11, aufweisend:
Strukturieren (1021) einer Metallschicht, bevorzugt einer Metallfolie, mittels Fräsen, Ätzen, Stanzen und/oder Laserschneiden, um die strukturierte Sensoranordnung (5, 5'), bevorzugt einteilig, zu erhalten.

13. Verfahren nach Anspruch 11 oder 12, wobei das Anordnen (1020) aufweist:
Laminieren und/oder Kleben (1022) der strukturierten Sensoranordnung (5, 5') auf die zweite Oberfläche des Substrats (3, 3' 3").

14. Verfahren nach einem der Ansprüche 11 bis 13, aufweisend:
Anordnen (1030) zumindest eines Adhäsionsmittels (15a" - 15n"), zumindest bereichsweise, auf der ersten und/oder auf der zweiten Oberfläche des Substrats (3, 3' 3"), zum Anbringen der Sensoreinheit an der galvanischen Zelle.

15. Galvanische Zelle, insbesondere eine Batteriezelle oder eine Brennstoffzelle, mit zumindest einer an der galvanischen Zelle angeordneten Sensoreinheit nach einem der Ansprüche 1 bis 10 und/oder hergestellt mit einem Verfahren nach einem der Ansprüche 11 bis 14.
